Europäisches Patentamt

European Patent Office

Office européen des brevets

(11) Veröffentlichungsnummer : **0 132 702**
B1

# (12) EUROPÄISCHE PATENTSCHRIFT

(45) Veröffentlichungstag der Patentschrift :
04.03.87

(21) Anmeldenummer : 84108155.7

(22) Anmeldetag : 11.07.84

(51) Int. Cl.⁴ : **B 60 D** **1/14**, B 60 D **1/06**, B 62 D 53/04

(54) Kupplungsverbindung zwischen einem Zugfahrzeug und einem Anhänger, vorzugsweise Einachsanhänger.

(30) Priorität : 21.07.83 DE 3326333
21.05.84 DE 3418927

(43) Veröffentlichungstag der Anmeldung :
13.02.85 Patentblatt 85/07

(45) Bekanntmachung des Hinweises auf die Patenterteilung : 04.03.87 Patentblatt 87/10

(84) Benannte Vertragsstaaten :
DE FR GB IT SE

(56) Entgegenhaltungen :
DE-A- 2 135 704
DE-A- 2 311 586
DE-A- 3 140 322
DE-A- 3 149 700
DE-U- 6 910 947
FR-A-   710 594
US-A- 1 785 124
US-A- 2 125 479
US-A- 2 444 944
US-A- 3 787 068
US-A- 4 019 754
US-A- 4 076 264
US-A- 4 106 794
US-A- 4 248 451

(73) Patentinhaber : Alois Kober KG, Maschinenfabrik
Ichenhauserstrasse 14
D-8871 Kötz 2 (DE)

(72) Erfinder : Kober, Kurt
Am Sandberg 2
D-8871 Kötz (DE)
Erfinder : Wöhrle, Rudolf, Dipl.-Ing.
Kirchstrasse 2
D-8873 Ichenhausen-Rieden (DE)
Erfinder : Köhler, Robert, Ing.-Grad.
Kamnat 126b
D-8871 Burtenbach (DE)

(74) Vertreter : Ernicke, Hans-Dieter, Dipl.-Ing.
Schwibbogenplatz 2b
D-8900 Augsburg (DE)

## Beschreibung

Die Erfindung bezieht sich auf eine Kupplungsverbindung zwischen einem Zugfahrzeug und einem Anhänger, vorzugsweise Einachsanhänger, mit den im Oberbegriff der Ansprüches 1 und 7 aufgeführten Merkmalen.

Eine derartig ausgebildete Kupplungsverbindung ist durch die DE-A-31 49 700 bekannt geworden. Sie ist vorgesehen für Zugfahrzeuge, die eine Anhängerkupplung mit einem Kugelkopf aufweisen.

Danach ist es bekannt, den effektiven Anlenkpunkt einer Kupplungsverbindung zwischen einem Zugfahrzeug und einem Anhänger von der bisher üblichen Lage an der Rückfront des Zugfahrzeuges in Richtung zu dessen Schwerpunkt zu verlagern. Als Mittel hierzu werden abgewinkelte Lenker verwendet, die einerseits am Zugfahrzeug und andererseits am Anhänger mit voneinander unterschiedlichen Abständen gelenkig gelagert sind und die bisher übliche Zuggabelspitze ersetzen. Die Gelenkpunkte am Zugfahrzeug liegen enger beieinander als die Gelenkpunkte am Anhänger. Die Lenkeranordnung wird auf dem Kugelkopf der Anhängerkupplung des Zugfahrzeuges eingehängt.

Diese vorbekannte Lösung läßt theoretisch die Möglichkeit zu, das Zugfahrzeug gegenüber der Längsachse des Anhängers um bis zu 60° einzulenken, und sie ist in der Lage, die bei Gespannen auftretenden Schwänzelbewegungen wesentlich zu vermindern.

Hinsichtlich der stabilen und für die Typprüfung sowie Verkehrszulassung geeigneten Ausführung und hinsichtlich des Fahrverhaltens im eingeschwenkten Zustand sind jedoch Probleme vorhanden.

Aus der US-A-244 944 ist eine Schleppverbindung für zwei Kettenpanzer bekannt. Diese sind durch zwei jeweils gelenkig mit den Panzern verbundene gerade Lenker gekuppelt. Zum Ausgleich von Geländeunebenheiten und zur Erhöhung der Traktion des ziehenden Panzers sind die Gelenke am ziehenden Panzer höher als am geschleppten Panzer angeordnet, wodurch sich eine schräg aufwärts gerichtete Zugkraft ergibt.

Mit der Erfindung wird daher die Aufgabe gestellt, die Kupplungsverbindung nach der DE-A-31 49 700 dahingehend weiterzugestalten, daß ihre theoretische Einsatzfähigkeit auch für den praktischen Gebrauch realisierbar ist, wobei über 60° hinausgehende Lenkeinschläge ohne Beeinträchtigung des Fahrverhaltens und unabhängig von der Heckgestaltung verschiedener Zugfahrzeuge ermöglicht werden sollen.

Die erste erfindungsgemäße Lösung der gestellten Aufgabe ergibt sich aus dem Kennzeichen des Anspruches 1.

Mit der erfindungsgemäßen Ausbildung der Gelenke wird der Vorteil erreicht, das Zugfahrzeug gegenüber der Längsachse des Anhängers um tatsächlich bis zu 90° einzulenken. Hierbei nutzt die Erfindung die Erkenntnis aus, daß die Heckpartie eines Zugfahrzeuges in Richtung zu dessen Schwerpunkt schräg verlaufend ausgebildet ist. Somit gelingt es durch eine wesentliche Tieferverlegung der anhängerseitigen Gelenke gegenüber dem Kugelkopf der Anhängerkupplung den Einschlagwinkel zwischen Zugfahrzeug und Anhänger effektiv wesentlich zu vergrößern, ohne daß die Gelenke der erfindungsgemäßen Kupplungsverbindung Gefahr laufen, an Heckflächen des Zugfahrzeuges anzustoßen.

Die Lehre des Anspruches 1 läßt sich in verschiedenen Varianten ausführen. Gemäß dem Anspruch 2 sind die Lenker so gekrümmt, daß lediglich die anhängerseitigen Gelenke vertieft angeordnet sind. Bei der Lehre des Anspruches 3, wonach alle Gelenke gegenüber dem Kugelkopf des Zugfahrzeuges vertieft angeordnet sind, wird der Vorteil der einfacheren Gestaltung der Lenker erreicht.

Die Lehre des selbständigen Anspruches 7 bringt zusätzlich den Vorteil, daß man die Kupplungsverbindung mit einem einfachen Handgriff an der üblichen Anhängerkupplung des Zugfahrzeuges einkuppeln kann und dabei zu einer besonders stabilen Konstruktion gelangt.

Es ist zwar durch die Fig. 7 bis 10 der DE-A-31 49 700 der Prinzipgedanke dieser Möglichkeit schon offenbart worden, allerdings in einer konstruktiven Gestaltung, die zu unstabil ist und vor allem das Problem mit sich bringt, daß die Nickbewegung zwischen Zugfahrzeug und Anhänger bei sehr großem Einschlagwinkel von über 60° gesperrt wird.

Die Erfindung beseitigt alle diese Probleme, denn sie läßt nicht nur einen vergrößerten Lenkeinschlag zu, sondern sie gestattet sogar bei einem extremen Lenkeinschlag von z. B. 90° die Nickbewegung zwischen Zugfahrzeug und Anhänger, weil die vorderen Gelenke aufnehmende Traverse um eine horizontale Achse drehbar im Kupplungsgehäuse gelagert ist. Auch kann der Anhänger trotz dieser extremen Lenkstellung gegenüber dem Zugfahrzeug verwinden, und zwar durch die Kugelgelenkbewegung an den dem Zugfahrzeug zugekehrten Gelenken, die bei 90° Lenkeinschlag, bezogen auf die Längsachse des Anhängers, hintereinander liegen. Die Lehre des Anspruchs 7 läßt sich mit besonderem Vorteil in Verbindung mit der erfindungsgemäßen Kupplungsverbindung durchführen. Sie ist aber auch für andere Kupplungsverbindungen, beispielsweise nach der DE-A-31 49 700 mit Vorteil verwendbar.

Mit den abhängigen Ansprüchen 11 bis 17 wird eine besonders stabile und zuverlässig drehstarr an der Anhängerkupplung des Zugfahrzeugs befestigbare Formgebung des Kupplungsgehäuses offenbart.

Weitere Einzelheiten der Erfindung sind in der Zeichnung schematisch und beispielsweise dargestellt. Es zeigen :

Figur 1   eine schematische Draufsicht auf ein aus Zugfahrzeug, Kupplungsverbindung und Anhänger bestehendes Gespann,

Figur 2 einen Vertikalschnitt durch einen Lenker der Kupplungsverbindung einer ersten Ausführungsform,

Figur 3 eine Seitenansicht, teilweise mit Vertikalschnitt, einer Kupplungsverbindung in einer zweiten Ausführungsform,

Figur 4 eine Draufsicht auf die Kupplungsverbindung gemäß Fig. 3 in Geradeausfahrtstellung,

Figur 5 eine Draufsicht entsprechend Fig. 4 in 90°-Lenkeinschlagstellung,

Figur 6 einen Vertikalschnitt nach der Linie VI-VI durch das Kupplungsgehäuse gemäß Fig. 3,

Figur 7 eine Stirnansicht der Kupplungsverbindung entsprechend Pfeil A in Fig. 4 und

Figuren 8 und 9 Seiten- und Stirnansicht, teilweise im Schnitt, eines Teiles einer Anhängerkupplung.

Die Erfindung geht von einem vorbekannten Gespann aus, dessen Zugfahrzeug mit 1 und dessen Anhänger mit 2 bezeichnet ist. Die erfindungsgemäße Kupplungsverbindung zwischen beiden wird durch Lenken 3, 4 herbeigeführt, welche die Gelenke 5 bis 8 aufweisen. Der Abstand der Gelenke 5, 6 ist kleiner als der Abstand der Gelenke 7 und 8. Daraus ergibt sich, daß der effektive Anlenkpunkt in Richtung zum Schwerpunkt des Zugfahrzeuges 1 verlagert ist.

Die Gelenke 5, 6 können an einem Steg 9 des Zugfahrzeuges 1 und die Gelenke 7, 8 an einer Schwenkachse 10 des Anhängers 2 angeordnet sein.

Die Erfindung schließt sämtliche Möglichkeiten ein, die durch den Stand der Technik, insbesondere durch die DE-A-31 49 700 erwähnt worden sind.

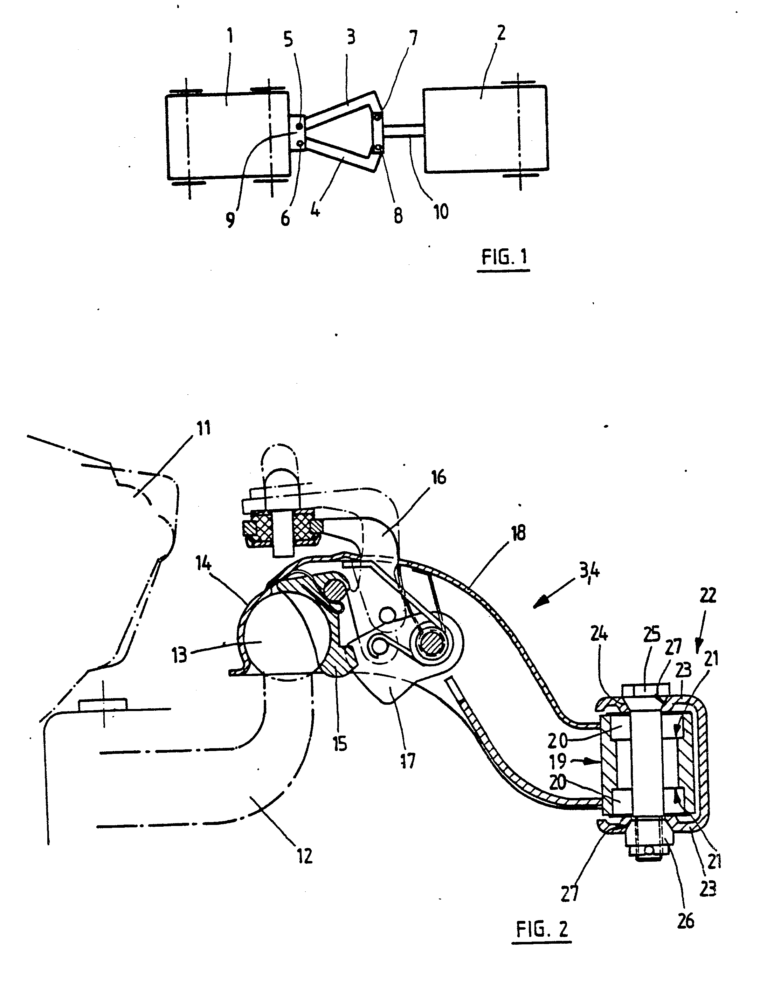

Im Ausführungsbeispiel der Fig. 2 wird der Längsschnitt durch das Heck 11 eines Zugfahrzeuges und durch einen Lenker 3, 4 (entlang seiner gebogenen Längsachse) gezeigt. Mit 12 ist eine Anhängerkupplung des Zugfahrzeuges dargestellt, die einen Kugelkopf 13 aufweist. Beim Gegenstand der Fig. 2 bleibt es offen, ob der Kugelkopf 13 mit dem in Fig. 1 dargestellten Steg 9 oder mit dem einzelnen Lenker 3, 4 in Verbindung steht. Wie bei herkömmlichen Kupplungsverbindungen üblich, wird die Kupplungskugel 13 von einer Spannkalotte 15 beaufschlagt, die über einen Spannhebel 16 mittels einer Spannkulisse 17 bewegbar ist. Hierbei handelt es sich um die Anwendung vorbekannter Raumformen.

Im Unterschied zum Stand der Technik besitzt der einzelne Lenker 3, 4 eine schwanenhalsförmige Krümmung 18, die in ein Auge 19 mündet, welches in Richtung zur Längsmittelebene des Gespannes vorstehend angeordnet ist. Dieses Auge 19 besitzt zwei Anschläge 21, gegen welche die äußeren Ringe von Schrägringrillenlager 20 anstoßen.

Das einzelne Auge 19 wird von einer gabelförmigen Aufnahme 22 (der Schwenkachse 10-vgl. Fig. 1) umgriffen. Diese Aufnahme 22 weist zwei das Auge 19 umgreifende Schenkel 23 auf, in denen sich vertikal gerichtete Bohrungen zur Aufnahme von Spannschrauben 25 bzw. Spannmuttern 26 befinden. Der Bohrungsrand 24 ist kragenartig nach innen verformt und paßt sich den konischen Ansätzen 27 der Spannschrauben 25 bzw. Spannmuttern 26 an. Beim Verschrauben der Spannelemente 25, 26 wird somit der kragenartige Bohrungsrand 24 gegen die inneren Ringe der Lager 20 verspannt, deren äußere Ringe sich an den Anschlägen 21 abstützen.

Auf diese Weise wird mit einfachsten Mitteln eine ordnungsgemäße Lagerung und Zentrierung sowie Verspannung der Lenker 3, 4 anhängerseitig erreicht, wobei die Voraussetzung geschaffen worden ist, die Lenker 3, 4 windschief zu krümmen und zur Lösung der gestellten Aufgabe geeignet anzupassen.

Im konkreten Fall empfiehlt es sich, die durch das Auge 19 gemäß Fig. 2 verlaufende zentrale Horizontalebene etwa 75 mm tiefer als die durch die Kupplungskugeln 13 verlaufende Horizontalebene anzuordnen. Hierbei handelt es sich um ein Mittelmaß, welches durchaus in Abhängigkeit von den konstruktiven Gegebenheiten eines Gespannes weitläufig verändert werden kann.

Es hat sich außerdem als zweckmäßig erwiesen, den Abstand der dem Zugfahrzeug zugeordneten Gelenke 5, 6 vom Heck 11 des Zugfahrzeuges 1 gegenüber herkömmlichen Kupplungen zu vergrößern, beispielsweise um etwa 30 %. Dieser angegebene Prozentsatz läßt sich nach den Gegebenheiten auch erheblich verändern.

Entscheidend ist bei jeglicher Bemaßung, die optimale Lage der Gelenkpunkte 5 bis 8 herauszufinden, um einen maximalen Lenkeinschlag angesichts der vorhandenen Konturen des Zugfahrzeuges und des Anhängers zu ermöglichen.

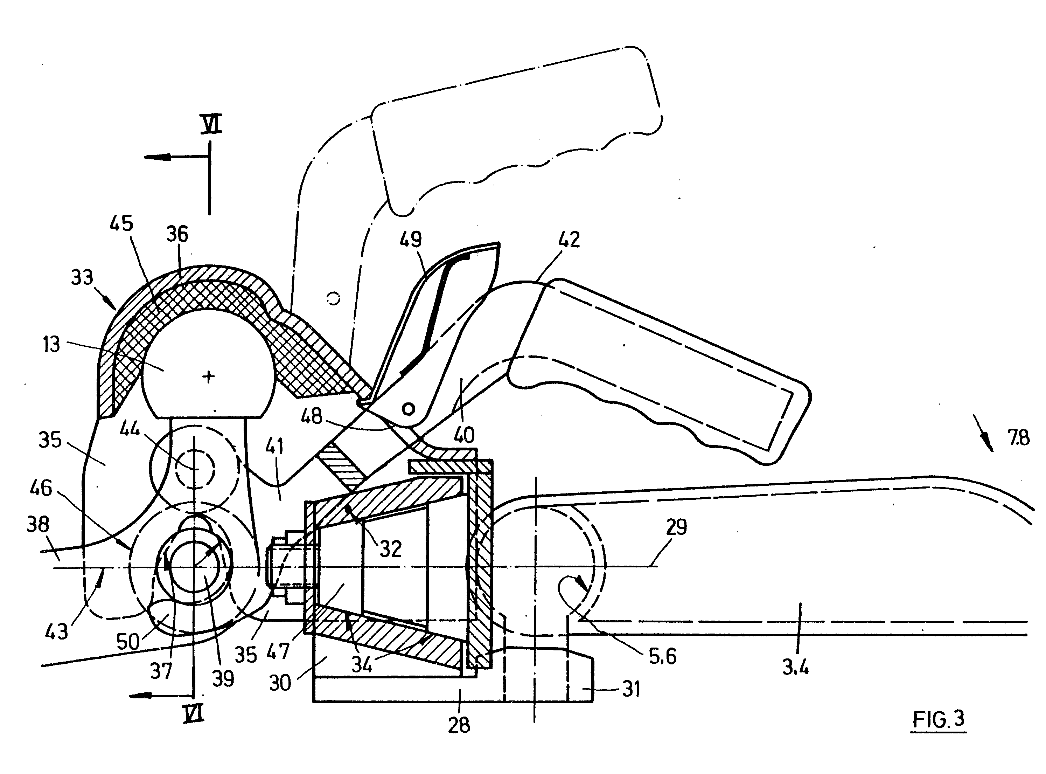

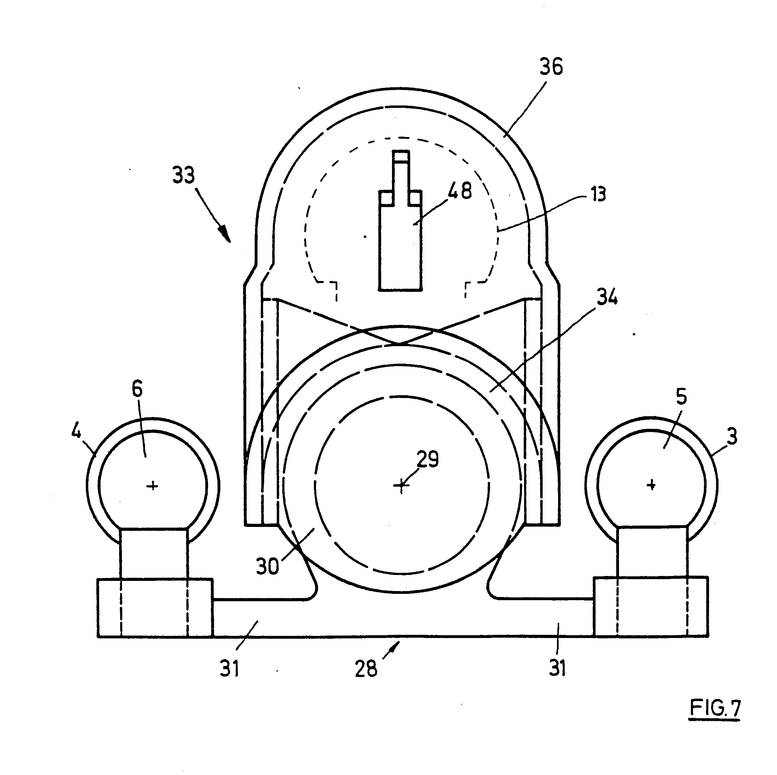

Im zweiten Ausführungsbeispiel gemäß den Fig. 3 bis 7 wird — im Gegensatz zu Fig. 2 — davon ausgegangen, sämtliche Gelenke 5, 6, 7, 8 tiefer als den Kugelkopf 13 zu legen. Die in Fig. 3 dargestellte Längsachse 29, welche durch das dem Zugfahrzeug zugekehrte Gelenk 5, 6 mittig verläuft, befindet sich bei einem bevorzugten Ausführungsbeispiel etwa 70 mm unterhalb der Achse des Kugelkopfes 13.

Im rechten Teil der Fig. 3 sind die an den Lenkern 3, 4 befindlichen hinteren Gelenke 7, 8 nur angedeutet.

Diese Tieferlegung sämtlicher Gelenke 5 bis 8 bringt den Vorteil mit sich, die beiden vorderen Gelenke 5, 6 in einer Traverse 28 anzuordnen, die um die genannte Längsachse 29 drehbar in einem Gehäuse 33 der Kupplung gelagert ist. Dieses Kupplungsgehäuse 33 ist dazu bestimmt, am normalen Kugelkopf 13 einer üblichen Anhängerkupplung des Zugfahrzeuges eingehängt zu werden.

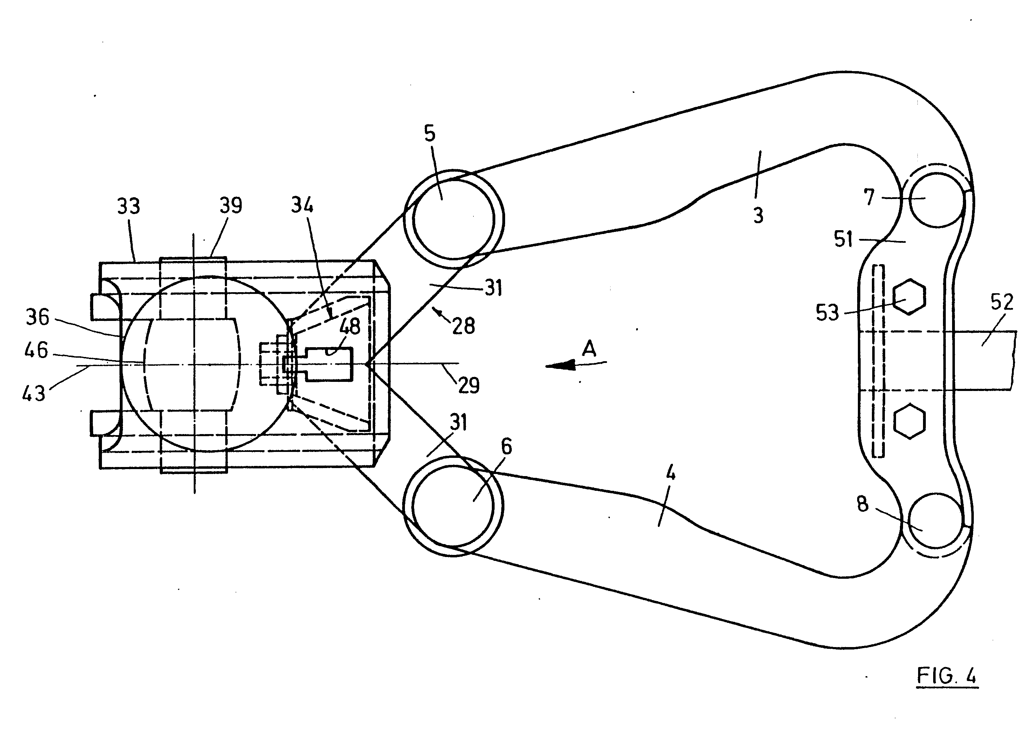

Wie besonders Fig. 4 deutlich zeigt, weist die Traverse 28 pfeilspitzenartig in Richtung zum Anhänger 2 sich erweiternde Schenkel 31 auf, an deren Ende die beiden Gelenke 5, 6 befestigt sind. Diese Schenkel 31 gehen vom unteren Rand eines aufrechten Mittelteiles 30 der Traverse 28 aus. Dieser aufrechte Mittelteil 30 enthält eine konische Lagerhülse 32, die zusammen mit einem Konuszapfen 47 ein Kegellager 34 bildet. Der Konuszapfen 47 ist Bestandteil des Kupplungsgehäuses 33.

Der Sinn dieser Kegellagerung besteht darin, daß die Gelenke 5, 6 der Traverse 28 um die Längsachse 29, die zugleich zentrische Lagerachse des Kegellagers 34 ist, eine Schwenkbewegung ausführen können, die dazu notwendig ist, das Verwinden des Anhängers gegenüber dem Zugfahrzeug um die Längsachse des Gespannes zu ermöglichen.

Zugleich wird mit dieser Anordnung der Vorteil erzielt, daß die Lenker 3, 4 mit den Gelenken 5 bis 8 eine vormontierte kompakte Einheit bilden, die im Kupplungsgehäuse 33 drehbar gelagert ist, so daß man die gesamte Anordnung gemäß Fig. 3 und 4 — wie man es bisher gewohnt ist — mit einem einzigen Spannhebel 40 am Kugelkopf 13 einer herkömmlichen Anhängerkupplung des Zugfahrzeuges einhängen kann.

Das Kupplungsgehäuse 33 weist ein kalottenförmiges Gehäuseteil 36 auf, dessen Form so gewählt ist, daß die Kalotte — wie üblich — von oben her auf den Kugelkopf 13 aufgesetzt werden kann. An der Innenseite des kalottenförmigen Gehäuseteiles 36 befindet sich ein elastisches Kissen 45, insbesondere aus Gummi oder dgl.

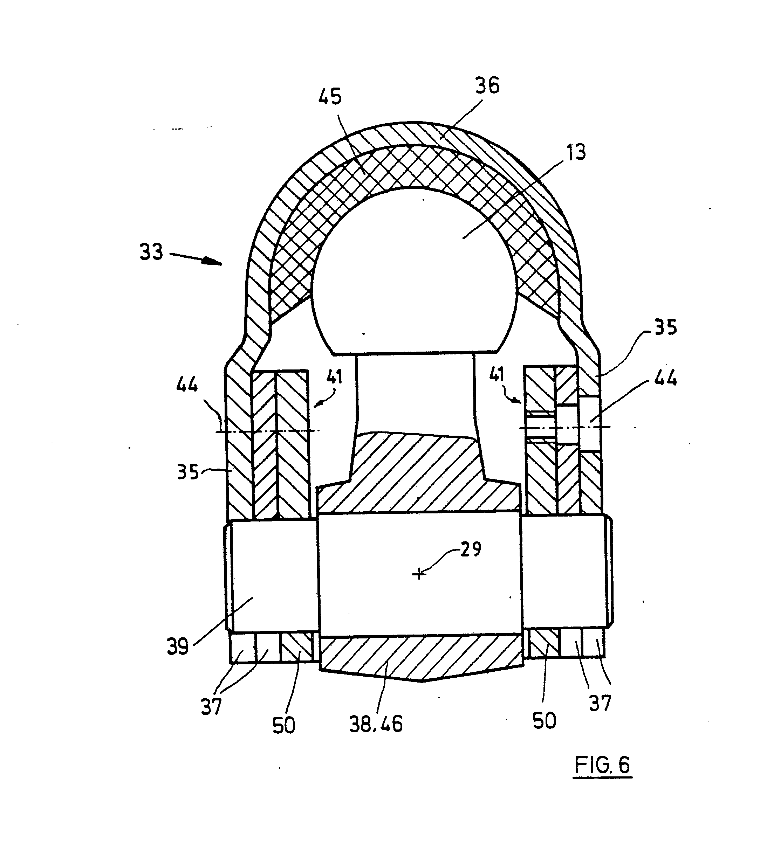

Von diesem kalottenförmigen Gehäuseteil 36 ragen zwei Wangen 35 abwärts, wie dies aus Fig. 6 deutlicher hervorgeht. Diese Wangen 35 umgreifen an einander gegenüberliegenden Seiten den Kupplungshals 38 der normalen Anhängerkupplung. Im Knick dieses Kupplungshalses 38 befindet sich ein Bolzen 39, der den Hals 38 quer zur Längsachse 29 durchsetzt und auch die Wangen 35 durchragt. Diese Wangen 35 besitzen nach unten offene, keilförmige Aussparungen 37, die dem Durchmesser des Bolzens 39 angepaßt sind. Dadurch wird beim Aufsetzen des Kupplungsgehäuses 33 auf den Kugelkopf 13 sichergestellt, daß das Kupplungsgehäuse 33 zufolge des Eingreifens des Bolzens 39 in die keilförmigen Aussparungen 37 nicht mehr um die Vertikalachse durch den Kugelkopf 13 verdrehbar ist. Diese Verdrehbarkeit muß auch total ausgeschaltet werden, weil der Lenkeinschlag, wie eingangs erwähnt, über die beiden Lenker 3, 4 mit deren Gelenken 5 bis 8 herbeigeführt wird.

Um nun das Kupplungsgehäuse 33 auf der Anhängerkupplung 13, 38 festzuspannen und gegen unerwünschtes Abheben zu sichern, ist an den Wangen 35 ein Spannhebel 40 im Lagerbolzen 44 drehbar gelagert. Dieser Spannhebel 40 befindet sich mit einem gabelartig ausgebildeten Teil 41 innerhalb des Kupplungsgehäuses 33. Dieses gabelartige Teil 41 umgreift sowohl den Kupplungshals 38 als auch die konische Lagerhülse 32 der Traverse 28. An den gabelartigen Teil 41 schließt sich ein einarmiger Hebelteil 42 an, der das Kupplungsgehäuse 33 durch eine Aussparung 48 durchdringt. In üblicher Weise kann der Spannhebel 40 mit einem Arretiergesperre 49 versehen sein, welches in der Spannstellung die Lage des Spannhebels 40 arretiert.

Der gabelartig ausgebildete Teil 41 umgreift mit seinem unterhalb des Lagerbolzens 44 befindlichen Spannschenkel 50 den Bolzen 39, der zweckmäßigerweise eine Auflaufschräge besitzt. Verdreht man den Spannhebel 40 aus der in Fig. 3 gezeigten strichpunktierten Stellung in die ausgezogen dargestellte Spannstellung, dann verspannen die Spannschenkel 50 das kalottenförmige Gehäuseteil 36 des Kupplungsgehäuses 33 gegenüber dem Bolzen 39, wofür das elastische Kissen 45 als elastisches Zwischenglied erforderlich ist.

Im Ausführungsbeispiel der Fig. 4 ist das Kupplungsgehäuse 33 mit der daran gelagerten Traverse 28 in der Geradeausfahrt-Stellung des Gespannes dargestellt. Die Gelenke 5, 6, 7, 8 sind paarweise symmetrisch zur Längsachse 29 angeordnet. Die Gelenke 5, 6 befinden sich deutlich hinter dem Kugelkopf 13.

Die hinteren Gelenke 7, 8 sitzen an einem Querjoch 51, das über die Befestigung 53 mit der Zugstange 52 des Anhängers verbunden ist.

Die Relativverdrehung des Anhängers gegenüber dem Zugfahrzeug um die Längsachse 29 wird mit der erfindungsgemäßen Kupplungsverbindung über das Kegellager 34 der Traverse 28 am Kupplungsgehäuse 33 ermöglicht. Die beim Durchfahren von Bodenwellen entstehenden Nickbewegungen zwischen dem Zugfahrzeug und dem Anhänger werden durch die Kugel-Gelenk-Funktion der beiden vorderen Gelenke 5, 6 zugelassen.

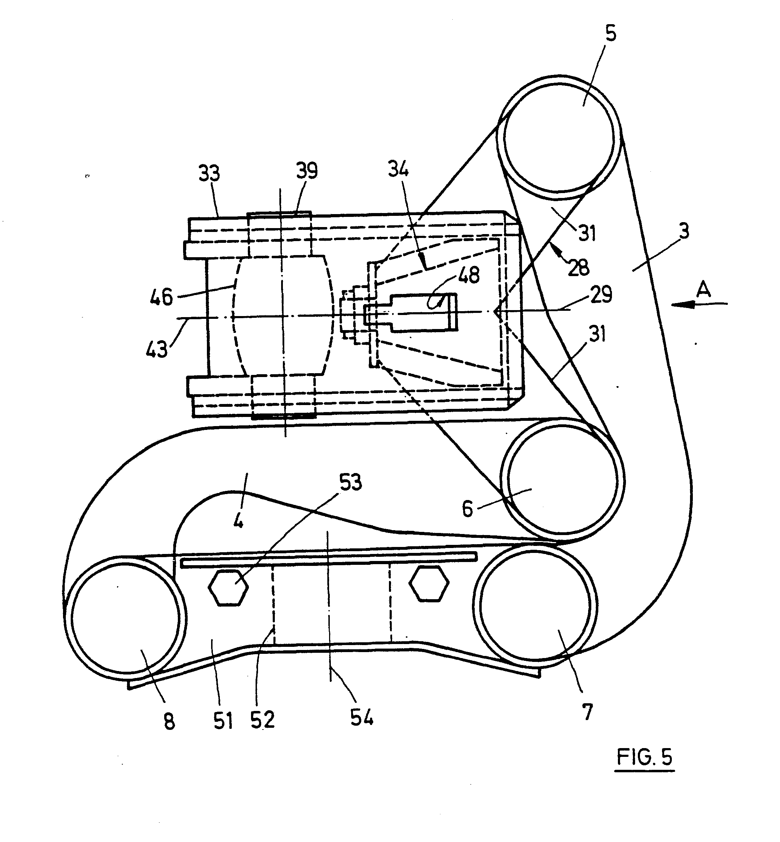

Anders verhält sich die erfindungsgemäße Kupplungsverbindung bei starkem Lenkeinschlag. Im Beispiel der Fig. 5 ist beispielsweise ein Lenkeinschlag von 90° gezeigt. Man erkennt, daß die Traverse 28 mit den beiden vorderen Gelenken 5, 6 in ihrer Normalstellung gemäß Fig. 4 verblieben ist, weil die Traverse 28, die übrigens in axialer Richtung (bezogen auf die Längsachse 29) spielfrei eingestellt ist, nur den Freiheitsgrad der Drehbewegung um die Längsachse 29 besitzt. Beim Lenkeinschlag bewegen sich hingegen die Lenker 3, 4 um die vorderen Gelenke 5, 6. Man erkennt, daß die Längsachse 54 des Anhängers im rechten Winkel zur Längsachse 29 des Kegellagers 34 sich befindet. Folglich sind die hinteren Gelerke 7, 8 nun parallel zur Längsachse 29 angeordnet, wobei das Gelenk 7 dem Gelenk 6 dicht benachbart ist. Die Formgebung der Lenker 3, 4 ist, wie ersichtlich, so ausgebildet, daß beim starken Lenkeinschlag die Lenker 3, 4 nicht mit der Traverse 28 bzw. den vorderen Gelenken 5, 6 kollidieren.

In dieser Lenkeinschlag-Stellung wird das Nicken des Anhängers gegenüber dem Zugfahrzeug dadurch zugelassen, daß die erfindungsgemäße Kupplungsverbindung um die Lagerachse 29 des Kegellagers 34 drehbar ist. Hingegen wird das Verwinden des Anhängers gegenüber dem Zugfahrzeug um die Längsachse 54 des Anhängers, wie ersichtlich, dadurch ermöglicht, daß der Anhänger um die Verbindungslinie der vorderen Gelenke 5, 6 sich verdrehen kann.

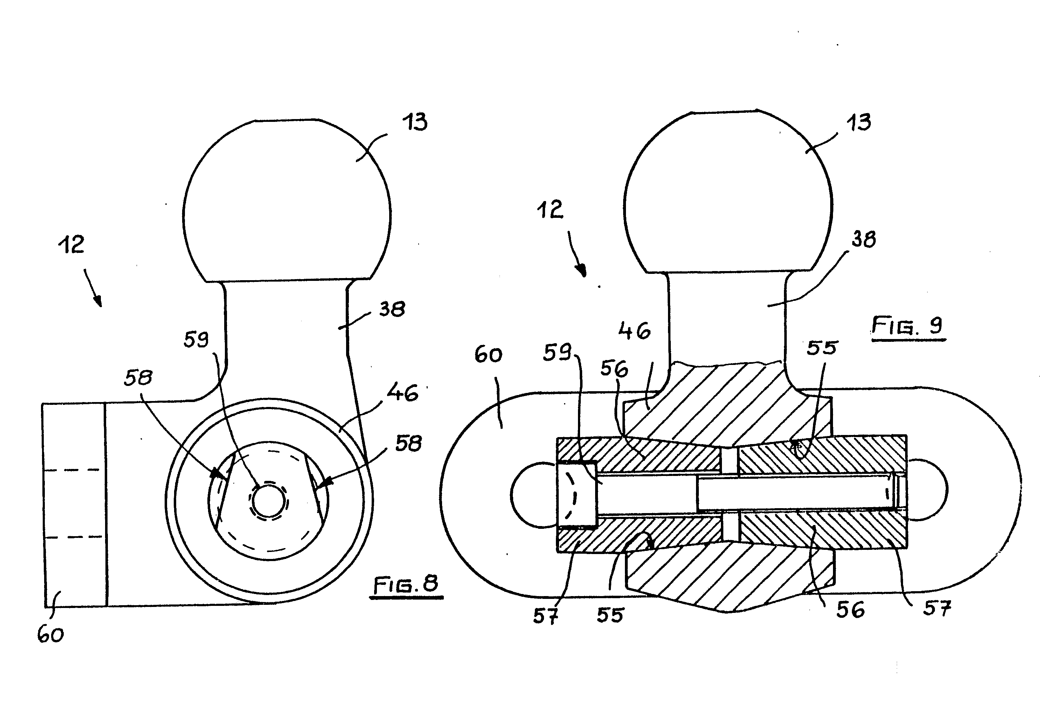

Beim Ausführungsbeispiel der Fig. 8 und 9 weist die Nabe 46 der Anhängerkupplung 12 eine von außen nach innen sich konisch verjüngende Bohrung 55 auf, in die zwei ebenfalls konische Bolzen 56 eingreifen. Diese sind mit der Schraube 59 gegeneinander verspannt. Jeder Bolzen 56 ragt mit einem zylindrischen Ansatz 57 über die Stirnseite der Nabe 46 hinaus, so daß der einzelne Ansatz 57 vom Spannschenkel 50 des Spannhebels 40 untergriffen werden kann. Außerdem weisen die Ansätze 57 seitliche Keilflächen 58 auf, die sich nach oben verjüngen und eine Führung für die keilförmige Aussparung 37 des Gehäuses 36 bilden (siehe auch Fig. 3).

Das in den Fig. 8 und 9 dargestellte Teil der Anhängerkupplung 12 kann auch mit einem Flansch 60 versehen sein, um es mit einem passenden, am Zugfahrzeug befestigten Teil zu verbinden.

Stückliste

1 Zugfahrzeug
2 Anhänger
3 Lenker
4 Lenker
5 Gelenk
6 Gelenk
7 Gelenk
8 Gelenk
9 Steg
10 Schwenkachse
11 Heck des Zugfahrzeuges
12 Anhängerkupplung
13 Kugelkopf
14 Kupplungsgehäuse
15 Spannkalotte
16 Spannhebel
17 Spannkulisse
18 schwanenhalsförmige Krümmung
19 Auge
20 Schrägringrillenlager
21 Anschlag
22 Aufnahme
23 Schenkel
24 kragenartiger Bohrungsrand
25 Spannschrauben
26 Spannmuttern
27 konischer Ansatz
28 Traverse
29 Längsachse
30 aufrechtes Mittelteil der Traverse
31 Schenkel der Traverse
32 Lager der Traverse
33 Kupplungsgehäuse
34 Kegellager
35 Wange
36 kalottenförmiges Gehäuseteil
37 keilförmige Aussparung
38 Kupplungshals
39 Bolzen
40 Spannhebel
41 gabelartig ausgebildetes Teil
42 einarmiges Hebelteil
43 Horizontalebene
44 Lagerbolzen
45 elastisches Kissen
46 Auge, Nabe
47 Konuszapfen
48 Aussparung
49 Arretiergesperre
50 Klaue Spannschenkel
51 Querjoch
52 Zugstange
53 Befestigung
54 Längsachse Anhänger
55 Bohrung
56 Bolzen
57 Ansatz
58 Keilfläche
59 Schraube
60 Flansch

**Patentansprüche**

1. Kupplungsverbindung zwischen einem Zugfahrzeug (1), das eine Anhängerkupplung (12) mit einem Kugelkopf (13) aufweist und einem Anhänger (2), vorzugsweise Einachsanhänger, mit einer, auf dem Kugelkopf (13) einzuhängenden Anordnung zum Verlegen des effektiven Anlenkpunktes in Richtung zum Schwerpunkt des Zugfahrzeuges (1), bestehend aus zwei beidseits der Gespannlängsachse angeordneten, das Zugfahrzeug (1) mit dem Anhänger (2) verbindenden und eine Viergelenkkette bildenden, gekrümten bzw. abgewinkelten Lenkern (3, 4), deren dem Zugfahrzeug (1) zugeordneten Gelenke (5, 6) voneinander einen geringeren Abstand als deren dem Anhänger (2) zugeordneten Gelenke (7, 8) aufweisen, dadurch gekennzeichnet, daß die dem Anhänger (2) zugeordneten Gelenke (7, 8) tiefer als der Kugelkopf (13) der Anhängerkupplung (12) angeordnet sind.

2. Kupplungsverbindung nach Anspruch (1), dadurch gekennzeichnet, daß die Lenker (3, 4) in der Vertikalebene schwanenhalsförmig (18) gekrümmt sind und anhängerseitig in Richtung zur Gespannlängsachse abgewinkelte Augen (19) zur Bildung der dem Anhänger (2) zugeordneten Gelenke (7, 8) aufweisen.

3. Kupplungsverbindung nach Anspruch (1), dadurch gekennzeichnet, daß auch die dem Zugfahrzeug (1) zugeordneten Gelenke (5, 6) tiefer als der Kugelkopf (13) angeordnet sind.

4. Kupplungsverbindung nach Anspruch (1) oder (2), dadurch gekennzeichnet, daß der Höhenunterschied zwischen den Kupplungsgelenken (7,8 und 5,6) ca. 75 mm beträgt.

5. Kupplungsverbindung nach Anspruch (1) oder einem der folgenden, dadurch gekennzeichnet, daß die dem Zugfahrzeug (1) zugeordneten Gelenke (5, 6) einen größeren Abstand zum Heck (11) des Zugfahrzeuges (1) als der Kugelkopf (13) der Anhängerkupplung (14) aufweisen.

6. Kupplungsverbindung nach Anspruch (1) oder einem der folgenden, dadurch gekennzeichnet, daß das anhängerseitige Lagerauge (19) des einzelnen Lenkers (3, 4) von einer gabelartigen Aufnahme (22, 23) der Anhängerdeichsel umgriffen ist, in deren Schenkel (23) vertikale Bohrungen mit kragenartig nach innen verformten Bohrungsrändern (24) vorgesehen sind, die über konische Ansätze (27) von Spannschrauben (25) bzw. Spannmuttern (26) gegen die inneren Ringe von Schrägringrillenlager (20) verspannt sind, deren äußere Ringe an Anschlägen (21) des Lagerauges (19) abgestützt sind.

7. Kupplungsverbindung zwischen einem Zugfahrzeug (1), das eine Anhängerkupplung (12) mit einem Kugelkopf (13) aufweist und einem Anhänger (2), vorzugsweise Einachsanhänger, mit einer, auf dem Kugelkopf (13) einzuhängenden Anordnung zum Verlegend des effektiven Anlenkpunktes in Richtung zum Schwerpunkt des Zugfahrzeuges (1), bestehend aus zwei beidseits der Gespannlängsachse angeorneten, das Zugfahrzeug (1) mit dem Anhänger (2) verbindenden und eine Viergelenkkette bildenden, gekrümmten bzw. abgewinkelten Lenkern (3, 4), deren dem Zugfahrzeug (1) zugeordneten Gelenke (5, 6) voneinander einen geringeren Abstand als deren dem Anhänger (2) zugeordneten Gelenke (7, 8) aufweisen, dadurch gekennzeichnet, daß die dem Zugfahrzeug (1) zugeordneten Gelenke (5, 6) an einer Traverse (28) angeordnet sind, welche in einem mit dem Kugelkopf (13) einer normalen Anhängerkupplung starr verbindbaren Gehäuse (33) um eine horizontale Längsachse (29) des Gespannes (1, 2) drehbar geführt ist.

8. Kupplungsverbindung nach Anspruch (7), dadurch gekennzeichnet, daß die Traverse (28) zwei vom unteren Rand eines aufrechten Mittelteiles (30) pfeilspitzenartig in Richtung zum Anhänger (2) abgewikelte Schenkel (31) aufweist, an deren Enden die Gelenke (5, 6) angeordnet sind.

9. Kupplungsverbindung nach Anspruch (7) oder (8), dadurch gekennzeichnet, daß das aufrechte Mittelteil (30) der Traverse (28) ein die Längsachse (29) bestimmendes Lager (34) aufweist, mit dem es am Gehäuse (33) geführt ist.

10. Kupplungsverbindung nach Anspruch (9), dadurch gekennzeichnet, daß das Lager (34) der Traverse (28) in Richtung der Längsachse (29) spielfrei einstellbar, beispielsweise als Kegellager (34), ausgebildet ist.

11. Kupplungsverbindung nach Anspruch (7) oder folgenden, dadurch gekennzeichnet, daß das die Traverse (28) aufnehmende Gehäuse (33) ein kalottenförmiges Gehäuseteil (36) zum Umgreifen des Kugelkopfes (13) sowie zwei davon abwärts sich erstreckende Wangen (35) aufweist, die mit jeweils einer keilförmigen, nach unten sich öffnenden Aussparung (37) an einem den Kupplungshals (38) der Anhängerkupplung unterhalb des Kugelkopfes (13) durchsetzender Bolzen (39) geführt sind, wobei ein den Bolzen (39) untergreifender Spannhebel (40) am Gehäuse (33) drehbar gelagert ist.

12. Kupplungsverbindung nach Anspruch (11), dadurch gekennzeichnet, daß der Kupplungshals (38) der Anhängerkupplung eine als Nabe (46) bzw. Auge ausgebildete Lagerung für den Bolzen (39) aufweist.

13. Kupplungsverbindung nach Anspruch (12), dadurch gekennzeichnet, daß die Nabe (46) eine von beiden Außenseiten nach der Mitte konisch sich verjüngende Bohrung (55) zur Aufnahme passender konischer Bolzen (56) aufweist, die je mit einem zylindrischen Ansatz (57) über die Nabe vorstehen.

14. Kupplungsverbindung nach Anspruch (13), dadurch gekennzeichnet, daß der zylindrische Ansatz (57) seitliche, nach oben sich verjüngende Keilflächen (58) aufweist.

15. Kupplungsverbindung nach Anspruch (11) oder einem der folgenden, dadurch gekennzeichnet, daß der Spannhebel (40) mit einem gabelartig ausgebildeten Teil (41) innerhalb des Gehäuses (33) angeordnet und gelagert ist und mit einem sich daran anschließenden einarmigen Hebelteil (42) durch eine Aussparung (48) in der Gehäusewand nach außen geführt ist.

16. Kupplungsverbindung nach Anspruch (11) oder einem der folgenden, dadurch gekennzeichnet, daß die dem Zugfahrzeug (1) zugekehrten Gelenke (5, 6) die Lagerachse (29) der Traverse (28) und der den Kupplungshals (38) durchsetzende Bolzen (39) in einer gemeinsamen Horizontalebene (43) liegen.

-

**Claims**

1. A coupling between a tractor (1), which comprises a trailer coupling (12) with a ball end (13), and a trailer (2), preferably a single-axle trailer, with an arrangement to be coupled to the ball end (13) for shifting the effective point of articulation towards the centre of gravity of the tractor (1), comprising two curved or angled guide rods (3, 4), which are disposed on both sides of the longitudinal axis of the trailer assembly, connect the tractor (1) to the trailer (2) and form a four-bar chain and whose joints (5, 6) associated with the tractor (1) are at a lesser distance from one another than their joints (7, 8) associated with the trailer (2), characterized in that the joints (7, 8) associated with the trailer (2) are situated at a lower level than the ball end (13) of the trailer coupling (12).

2. A coupling according to Claim 1, characterized in that the guide rods (3, 4) are bent into a goose-neck shape (18) in the vertical plane and on the side towards the trailer comprise eyes (19) angled towards the longitudinal axis of the trailer assembly in order to form the joints (7, 8) associated with the trailer (2).

3. A coupling according to Claim 1, characterized in that even the joints (5, 6) associated with the tractor (1) are situated at a lower level than the ball end (13).

4. A coupling according to Claim 1 or 2, characterized in that the difference in height between the coupling joints (7, 8 and 5, 6) amounts to approximately 75 mm.

5. A coupling according to any preceding Claim, characterized in that the joints (5, 6) associated with the tractor (1) are at a greater distance from the rear (11) of the tractor (1) than the ball end (13) of the trailer coupling (14).

6. A coupling according to any preceding Claim, characterised in that the bearing eye (19) — on the side towards the trailer — of the individual guide rod (3, 4) is embraced by a fork-like receiving means (22, 23) of the trailer towbar, in the arms (23) of which are provided vertical bores with rims (24) which are deformed inwards in the manner of collars and which are tensioned by tensioning screws (25) or tensioning nuts (26) by way of tapered extensions (27) against the inner races of sloping radial ball bearings (20), the outer races of which are supported on stops (21) of the bearing eye (19).

7. A coupling between a tractor (1), which comprises a trailer coupling (12) with a ball end (13), and a trailer (2), preferably a single-axle trailer, with an arrangement to be coupled to the ball end (13) for shifting the effective point of articulation towards the centre of gravity of the tractor (1), comprising two curved or angled guide rods (3, 4), which are disposed on both sides of the longitudinal axis of the trailer assembly, connect the tractor (1) to the trailer (2) and form a four-bar chain and whose joints (5, 6) associated with the tractor (1) are at a lesser distance from one another than their joints (7, 8) associated with the trailer (2), characterized in that the joints (5, 6) associated with the tractor (1) are mounted on a cross member (28) which is guided — so as to be rotatable about a horizontal longitudinal axis (29) of the trailer assembly — in a casing (33) rigidly connectable to the ball end (13) of a normal trailer coupling.

8. A coupling according to Claim 7, characterized in that the cross member (28) comprises two arms (31) which are angled towards the trailer (2) in the manner of an arrowhead from the lower edge of an upright central portion (30) and at the ends of which are disposed the guide rods (5, 6).

9. A coupling according to Claim 7 or 8, characterized in that the upright central portion (30) of the cross member (28) comprises a bearing (34) which determines the longitudinal axis (29) and by means of which it is guided on the casing (33).

10. A coupling according to Claim 9, characterized in that the bearing (34) of the cross member (28) is made adjustable without play in the direction of the longitudinal axis (29), for example in the form of a cone bearing (34).

11. A coupling according to any of Claims 7 to 10, characterized in that the casing (33) receiving the cross member (28) comprises a cupshaped casing part (36) for embracing the ball end (13) and two side walls (35) which extend downwards therefrom and which are guided in each case by one wedge-shaped recess (37) opening downwards in each case on a pin (39) traversing the coupling neck (38) of the trailer coupling below the ball end (13), a tension lever (40) engaging under the pin (39) being rotatably mounted on the casing (33).

12. A coupling according to Claim 11, characterized in that the coupling neck (38) of the trailer coupling comprises a bearing constructed in the form of a hub (46) or eye for the pin (39).

13. A coupling according to Claim 12, characterized in that the hub (46) is provided with a bore (55) converging in a tapered manner from both outer ends towards the centre for receiving matching tapered pins (56) which project beyond the hub with one cylindrical extension (57) in each case.

14. A coupling according to Claim 13, characterized in that the cylindrical extension (57) comprises lateral wedge surfaces (58) tapering upwards in each case.

15. A coupling according to any of Claims 11 to 14, characterized in that the tension lever (40) is arranged and mounted with a portion (41) constructed in the shape of a fork inside the casing (33) and is guided outwards with an adjoining one-armed lever portion (42) through a recess (48) in the casing wall.

16. A coupling according to any of Claims 11 to 15, characterized in that the joints (5, 6) facing the tractor (1), the bearing axis (29) of the cross member (28) and the pin (39) passing through the coupling neck (38) lie in a common horizontal plane (43).

**Revendications**

1. Attelage entre un véhicule tracteur (1), qui comporte un élément d'attelage de remorque (12) à boule (13), et une remorque (2), de préférence une remorque à essieu unique, comprenant un dispositif d'accrochage, à la boule (13) destiné à décaler le point effectif d'articulation en direction du centre de gravité du véhicule tracteur (1), constitué de deux bras articulés (3, 4), recourbés ou coudés, disposés de part et d'autre de l'axe longitudinal de l'ensemble véhicule tracteur-remorque, reliant le véhicule tracteur (1) à la remorque (2), et formant un mécanisme articulé à quatre articulations dont les articulations (5, 6) associées au véhicule tracteur (1) sont séparées l'une de l'autre par une distance moindre que celle qui sépare les articulations (7, 8) associées à la remorque (2), caractérisé en ce que les articulations (7, 8) associées à la remorque (2) sont disposées plus bas que la boule (13) de l'élément d'attelage de remorque (12).

2. Attelage suivant la revendication 1, caractérisé en ce que les bras articulés (3, 4) sont incurvés en forme de col de cygne (18) dans le plan vertical et comportent, du côté de la remorque, des coussinets (19) coudés en direction de l'axe longitudinal de l'ensemble du véhicule tracteur et de la remorque, pour former les articulations (7, 8) associées à la remorque (2).

3. Attelage suivant la revendication 1, caractérisé en ce que les articulations (5, 6), associées au véhicule tracteur (1) sont elles aussi disposées plus bas que la boule (13).

4. Attelage suivant la revendication 1 ou 2, caractérisé en ce que la différence de niveau entre les articulations de l'attelage (7, 8 et 5, 6) est de 75 mm environ.

5. Attelage suivant la revendication 1 ou l'une des suivantes, caractérisé en ce que les articulations (5, 6) associées au véhicule tracteur (1) sont à une plus grande distance de la partie arrière (11) du véhicule tracteur (1) que la boule (13) de l'attelage de remorque (12).

6. Attelage suivant la revendication 1 ou l'une des suivantes, caractérisé en ce que le coussinet de palier (19), situé du côté de la remorque, de chaque bras articulé (3, 4), est entouré d'une fourche de réception (22, 23) du timon d'attelage, dont la branche (23) est percée de perçages verticaux à rebords (24) déformés vers l'intérieur en forme de collet, et bloqués par des chanfreins (27) coniques des boulons de serrage (25) et d'écrous de serrage (16) sur les bagues intérieures de paliers à gorges annulaires obliques, les bagues extérieures de ceux-ci s'appuyant sur des butées (21) du coussinet de palier (19).

7. Attelage entre un véhicule tracteur (1), qui comporte un élément d'attelage de remorque (12) à boule (13), et une remorque (2), de préférence une remorque à essieu unique, comprenant un dispositif d'accrochage, à la boule (13) et destiné à décaler le point effectif d'articulation en direction du centre de gravité du véhicule tracteur (1), constitué de deux bras articulés (3, 4) recourbés ou coudés, disposés de part et d'autre de l'axe longitudinal de l'ensemble véhicule tracteur-remorque, reliant le véhicule tracteur (1) à la remorque (2), et formant un mécanisme articulé à quatre articulations dont les articulations (5, 6) associées au véhicule tracteur (1) sont séparées l'une de l'autre par une distance moindre que celle qui sépare les articulations (7, 8) associées à la remorque (2), caractérisé en ce que les articulations (5, 6) associées au véhicule tracteur (1) sont disposées sur une traverse (28) qui est guidée, avec possibilité de tourner autour d'un axe longitudinal horizontal (29) de l'ensemble du véhicule tracteur et de la remorque (1, 2), dans une enveloppe (33) qui peut être reliée rigidement à la boule (13) d'un élément d'attelage normal de remorque.

8. Attelage suivant la revendication 7, caractérisé en ce que la traverse (28) comporte deux branches (31) qui sont coudées en pointant à la manière d'une flèche en direction de la remorque (2), à partir du bord inférieur d'une partie médiane (30), et sur les extrémités desquelles sont disposées les articulations (5, 6).

9. Attelage suivant la revendication 7 ou 8, caractérisé en ce que la partie médiane (30) droite de la traverse (28) comporte un palier (34) qui définit l'axe longitudinal (29) et par lequel elle est guidée sur l'enveloppe (33).

10. Attelage suivant la revendication 9, caractérisé en ce que le palier (34) de la traverse (28) peut être réglé sans jeu en direction de l'axe longitudinal (29) en étant agencé, par exemple, en roulement à billes (34).

11. Attelage suivant la revendication 7 ou les suivantes, caractérisé en ce que la boite (33) de réception de la traverse (28) comporte une partie d'enveloppe (36) en forme de calotte destinée à envelopper la boule (13), ainsi que deux joues (35) s'étendant vers le bas à partir de celles-ci, et guidées respectivement par un évidement (37) cunéiforme débouchant vers le bas, sur un tourillon (39) traversant le collet (38) de l'élément d'attelage de remorque, en dessous de la boule (13), un levier de blocage (40), attaquant par en dessous le tourillon (39) étant monté tournant sur l'enveloppe (33).

12. Attelage suivant la revendication 1, caractérisé en ce que le collet (38) de l'élément d'attelage de remorque comporte un emplacement de palier agencé en moyeu (46) ou en coussinet pour le tourillon (39).

13. Attelage suivant la revendication 12, caractérisé en ce que le moyeu (46) comporte un perçage (55) qui se rétrécit coniquement des deux côtés extérieurs vers le milieu, qui est destiné à recevoir un axe (56) conique s'y adaptant et qui fait saillie du moyeu respectivement par une embase (57) cylindrique.

14. Attelage suivant la revendication 13, caractérisé en ce que l'embase (57) cylindrique présente latéralement des surfaces cunéiformes (58) se rétrécissant vers le haut.

15. Attelage suivant la revendication 11 ou l'une des suivantes, caractérisé en ce que le levier de blocage (40), ayant une partie (41) en forme de fourche, est disposé et monté à l'intérieur de l'enveloppe (33), et est guidé vers l'extérieur, à travers un évidement (48) de la paroi de l'enveloppe, par une partie (42) à bras unique formant levier.

16. Attelage suivant la revendication 11 ou l'une des suivantes, caractérisé en ce que les articulations (5, 6) tournées vers le véhicule tracteur (1), l'axe de palier (29) de la traverse (28) et le tourillon (39) passant dans le collet d'attelage (38) se trouve dans un plan horizontal (43) commun.

FIG. 1

FIG. 2

0 132 702

FIG. 3

FIG. 4

0 132 702

FIG. 5

4

FIG. 6

FIG.7

FIG.8

FIG. 9

0 132 702